(19) Europäisches Patentamt
European Patent Office
Office européen des brevets

(11) **EP 1 844 096 B1**

(12) **EUROPÄISCHE PATENTSCHRIFT**

(45) Veröffentlichungstag und Bekanntmachung des Hinweises auf die Patenterteilung:
**24.06.2009 Patentblatt 2009/26**

(51) Int Cl.:
*C08K 9/04* *(2006.01)*    *C08L 23/22* *(2006.01)*
*B60C 1/00* *(2006.01)*

(21) Anmeldenummer: **05820271.4**

(22) Anmeldetag: **21.12.2005**

(86) Internationale Anmeldenummer:
**PCT/EP2005/013752**

(87) Internationale Veröffentlichungsnummer:
**WO 2006/079404 (03.08.2006 Gazette 2006/31)**

(54) **KAUTSCHUKMISCHUNG FÜR INNERLINER VON FAHRZEUGLUFTREIFEN**

RUBBER BLEND FOR THE INNER LINER OF VEHICLE TYRES

MELANGE CAOUTCHOUTEUX DESTINE AU REVETEMENT INTERIEUR DE PNEUMATIQUES DE VEHICULES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **28.01.2005 DE 102005004031**

(43) Veröffentlichungstag der Anmeldung:
**17.10.2007 Patentblatt 2007/42**

(73) Patentinhaber: **Continental Aktiengesellschaft**
**30165 Hannover (DE)**

(72) Erfinder: **KRÜGER, Jörn**
**30175 Hannover (DE)**

(74) Vertreter: **Finger, Karsten**
**Continental Aktiengesellschaft**
**Patente und Lizenzen**
**Postfach 169**
**30001 Hannover (DE)**

(56) Entgegenhaltungen:
**WO-A-20/05017013          US-A1- 2004 242 795**

**Beschreibung**

Die Erfindung betrifft eine Kautschukmischung, insbesondere für den Innerliner von Fahrzeugluftreifen. Ferner betrifft die Erfindung einen Fahrzeugluftreifen mit einem Innerliner, der auf einer solchen Kautschukmischung basiert.

In schlauchlosen Fahrzeugluftreifen sorgt ein möglichst luftundurchlässiger, radial innen angeordneter Innerliner, auch Innenseele oder Innenplatte genannt, dafür, dass die in den Reifen eingepumpte Luft nicht entweicht. Dem Entweichen der Luft muss entgegengewirkt werden, da das Entweichen zu einem Minderdruck in Reifen führt, der die Haltbarkeit des Reifens stark beeinträchtigt. Ferner schützt der Innerliner die Karkasse vor dem Eindiffundieren von Luft und Feuchtigkeit; durch Luft und Feuchtigkeit können die Festigkeitsträger der Karkasse und/oder des Gürtels Schaden nehmen. Damit der Innerliner luftdicht bleibt, muss er auch eine gute Riss- und Ermüdungsbeständigkeit aufweisen, damit im Fahrbetrieb keine Risse entstehen, die die Luftdichtigkeit beeinträchtigen.

Als Kautschuke für den Innerliner werden üblicherweise Chlorbutylkautschuk oder Brombutylkautschuk, gelegentlich im Verschnitt mir Naturkautschuk, eingesetzt. Diese Kautschuktypen weisen eine geringe Gasdurchlässigkeit auf. Durch die Zudosierung von voluminösen wenig bzw. nicht aktiven Füllstoffen kann die Luftdichtigkeit weiter erhöht werden. Zu diesen Füllstoffen zählen z. B. Ruß des Typs N 660 und Kreide.

Aus der EP 0 832 927 B1 ist eine Kautschukmischung für Innerliner von Fahrzeugluftreifen bekannt, die als Füllstoff nicht aktivierte Kieselsäure enthält. Die Verwendung von Schichtsilikaten für Innerliner von Fahrzeugluftreifen ist in der US 5,576,372 beschrieben.

Durch die Zudosierung von inaktiven Füllstoffen, wie Kreide oder anderen Füllstoffen mit Schicht- oder Plättchenstruktur kann die Luftdichtigkeit des Innerliners zwar weiter verbessert werden, die Riss- und Ermüdungseigenschaften verschlechtern sich dadurch aber gleichzeitig.

Der vorliegenden Erfindung liegt die Aufgabe zugrunde, Kautschukmischungen, insbesondere für den Innerliner von Fahrzeugluftreifen, bereitzustellen, deren Vulkanisate sich durch eine hohe Luftdichtigkeit bei gleichzeitig verbesserter Riss- und Ermüdungsbeständigkeit auszeichnen. Bei Verwendung einer solchen Mischung für den Innerliner von Fahrzeugluftreifen erzielt man Reifen mit einer verbesserten Haltbarkeit.

Gelöst wird diese Aufgabe erfindungsgemäß dadurch, dass die Kautschukmischung

- 40 - 100 phr (Gewichtsteile bezogen auf 100 Gewichtsteile der Gesamtkautschukmasse) zumindest eines Halobutylkautschukes,
- bis maximal 60 phr zumindest eines weiteren Kautschukes ausgewählt aus der Gruppe, bestehend aus Butylkautschuk, Polybutadien, Styrol-Butadien-Copolymer, 3,4-Polyisopren, cis-1,4-Polyisopren, Naturkautschuk, Styrol-Isopren-Copolymer und Styrol-Isopren-Butadien-Terpolymer,
- 5 - 70 phr zumindest eines delaminierten Talkes mit einer BET-Oberfläche gemäß DIN 66131 von 10 - 40 $m^2$/g, einer mittleren Partikelgröße ($D_{50}$) von 4 - 8 $\mu$m bestimmt mit Laserbeugungsmessung und einem Schichtindex (lamellarity index) von 3 - 15,
- 10 - 100 phr zumindest eines Rußes mit einer CTAB-Oberfläche gemäß ASTM-D 3765 von 10 - 25 $m^2$/g und einer DBP-Zahl gemäß ASTM-D 2414 von 50 bis 160 mL/100 g enthält.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Überraschenderweise kann mit der speziellen Kombination von delaminiertem Talk mit dem genannten Ruß in den angegebenen Mengen in einer Halobutylkautschukmischung die Luftdichtigkeit der Vulkanisate erhöht und gleichzeitig die Riss- und Ermüdungsbeständigkeit verbessert werden. Dieser Effekt war nicht zu erwarten, da die Einmischung von plättchenförmigen Füllstoffen wie Talk in der Regel mit einer deutlichen Verschlechterung der Rissbeständigkeit der Vulkanisate einher geht.

Die erfindungsgemäße Kautschukmischung bietet zusätzlich den Vorteil, dass durch die Verwendung von Talk der Füllgrad im Innenmischer erhöht werden kann. Dies führt zu einer Kapazitätserhöhung und somit zu einer Reduktion der Herstellungskosten.

Bei den in der Kautschukmischung eingesetzten Halobutylkautschuken kann es sich um Chlor- oder Brombutylkautschuk handeln, die als frisch produzierte Kautschuke, aber auch als Regenerat eingesetzt werden können.

Die erfindungsgemäße Kautschukmischung kann neben den Halobutylkautschuken auch noch bis zu 60 phr eines weiteren Kautschukes ausgewählt aus der Gruppe, bestehend aus Butylkautschuk, Polybutadien, Styrol-Butadien-Copolymer, 3,4-Polyisopren, cis-1,4-Polyisopren, Naturkautschuk, Styrol-Isopren-Copolymer und Styrol-Isopren-Butadien-Terpolymer, enthalten.

Die Kautschukmischung enthält 5 - 70 phr, vorzugsweise 10 - 40 phr, zumindest eines delaminierten Talkes, der sich durch eine BET-Oberfläche gemäß DIN 66131 von 10 - 40 $m^2$/g und eine mittlere Partikelgröße ($D_{50}$) von 4 -

8 µm gemessen mittels Laserbeugung von kohärentem Licht auszeichnet. Der Schichtindex (lamellarity index) des Talkes beträgt 3 - 15 und ist ein Maß für die Talkmorphologie, d. h. für den Grad der Delaminierung (Entblätterung der Schichten); bei gleicher Feinheit des Talkes (bestimmt durch Laserbeugung) zeigt ein höherer Schichtindex eine höhere Talkstruktur an. Der Schichtindex wird ermittelt durch folgende Formel ermittelt:

$$\text{Schichtindex} = \frac{(\text{Partikelgröße aus Laserbeugung}) - (\text{Partikelgröße aus Sedimentation})}{(\text{Partikelgröße aus Sedimentation})}$$

Für die Ermittlung der Partikelgröße durch Sedimentation wurde ein SediGraph 5100 Partikelgrößenmessgerät der Firma Micromeritics Instruments, Deutschland verwendet. Ein Talk mit den vorgenannten Eigenschaften kann z. B. im Nassprozess gemäß US 6,348,536 B1 hergestellt werden.

Des Weiteren enthält die Kautschukmischung 10 - 100 phr zumindest eines Rußes mit einer CTAB-Oberfläche gemäß ASTM-D 3765 von 10 - 25 $m^2$/g und einer DBP-Zahl gemäß ASTM-D 2414 von 50 bis 160 mL/100 g. Solche Ruße zeichnen sich durch eine relativ große Partikelgröße aus und wirken wenig verstärkend. Es können mehrere Ruße im Verschnitt verwendet werden.

Besonders gute Luftdichtigkeit und Rissbeständigkeit der Vulkanisate bei gleichzeitig guter Verarbeitbarkeit der Mischung kann man erzielen, wenn die Mischung 30 bis 60 phr des Rußes enthält.

Durch den Einsatz eines Rußes mit einer CTAB-Oberfläche gemäß ASTM-D 3765 von 14 - 24 $m^2$/g und eine DBP-Zahl gemäß ASTM-D 2414 von 70 bis 90 mL/100 g können die Riss- und die Ermüdungsbeständigkeit besonders stark verbessert werden.

Neben den genannten Substanzen kann die erfindungsgemäße Kautschukmischung übliche Kautschukzuschlagstoffe in üblichen Mengen enthalten. Zu diesen Stoffen zählen z. B. Weichmacher, Alterungsschutzmittel, Aktivatoren, wie z. B. Zinkoxid und Fettsäuren (z. B. Stearinsäure), Wachse, Harze, Kreide und Mastikationshilfsmittel.

Die Vulkanisation wird in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen der Kautschukmischung zugesetzt.

Des Weiteren kann die Kautschukmischung vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. Benzothiazyldisulfid (MBTS), Sulfenamidbeschleuniger wie z. B. Benzothiazyl-2-cyclohexylsulfenamid (CBS), Guanidinbeschleuniger wie z. B. N,N'-Diphenylguanidin (DPG), Dithiocarbamatbeschleuniger wie z. B. Zinkdibenzyldithiocarbamat, Disulfide. Die Beschleuniger können auch in Kombination miteinander eingesetzt werden.

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet, z. B. durch einen Kalandervorgang, und in die entsprechende Form gebracht. Bevorzugt wird die Mischung in die Form eines Innerliners gebracht, der beim Reifenbau in der üblichen Art und Weise kalandriert und auf die Trommel aufgebracht wird. Der fertige Reifenrohling wird dann vulkanisiert.

Die Erfindung soll nun anhand von Vergleichs- und Ausführungsbeispielen, die in den Tabellen 1 und 2 zusammengefasst sind, näher erläutert werden.

Bei sämtlichen in der Tabelle 1 enthaltenen Mischungsbeispielen sind die angegebenen Mengenangaben Gewichtsteile, die auf 100 Gewichtsteile Gesamtkautschuk bezogen sind (phr). Die Vergleichsmischungen sind mit V gekennzeichnet, die erfmdungsgemäße Mischung ist mit E gekennzeichnet.

Die Mischungsherstellung erfolgte unter üblichen Bedingungen in zwei Stufen in einem Labortangentialmischer. Die Mischungen wurden auf ungefähr gleiche Härte eingestellt, da eine Hauptanforderung an eine Innerlinermischung eine Shore-A-Härte unter 50 ist. Bei einer größeren Härte würden während des Betriebes Risse im Innerliner auftreten. Die Umsatzzeiten bis zum Erreichen der relativen Vernetzungsgrade von 10, 40 und 90 % ($t_{10}$, $t_{40}$, $t_{90}$) wurden durch Verfolgung des Vulkanisationsprozesses über ein rotorloses Vulkameter gemäß DIN 53 529 ermittelt. Ferner sind die Mooney-Viskositäten der Mischungen gemäß DIN 53523 mit einem Scherscheibenviskosimeter bei 100 °C bestimmt worden. Aus sämtlichen Mischungen wurden Prüfkörper durch 15 minütige Vulkanisation unter Druck bei 160 °C hergestellt und mit diesen Prüfkörpern für die Kautschukindustrie typische Materialeigenschaften bestimmt, die in der Tabelle 2 aufgelistet sind. Für die Tests an Prüfkörpern wurden folgende Testverfahren angewandt:

- Zugfestigkeit bei Raumtemperatur gemäß DIN 53 504
- Reißdehnung bei Raumtemperatur gemäß DIN 53 504
- Spannungswerte bei 100, 200 und 300 % Dehnung bei Raumtemperatur gemäß DIN 53 504
- Bruchenergiedichte bestimmt im Zugversuch nach DIN 53 504, wobei die Bruchenergiedichte die bis zum Bruch erforderliche Arbeit bezogen auf das Volumen der Probe ist
- Skore-A-Härte bei Raumtemperatur gemäß DIN 53 505
- Rückprallelastizität bei Raumtemperatur gemäß DIN 53 512
- Luftpermeabilität gemäß DIN 53 536 bei 70 °C Lufttemperatur
- Monsanto Ermüdungstest (Fatigue to failure Tester) bei 136 % Dehnung und Raumtemperatur
- De Mattia-Prüfung auf Rissbild und Risswachstum gemäß DIN 53 522 bei Raumtemperatur

**Tabelle 1**

| Bestandteile | Einheit | 1(V) | 2(V) | 3(V) | 4(E) |
|---|---|---|---|---|---|
| Brombutylkautschuk | phr | 100 | 100 | 100 | 100 |
| Ruß A[a] | phr | 59 | 39 | - | - |
| Ruß B[b] | phr | - | - | 81 | 54 |
| delaminierter Talk[c] | phr | - | 30 | - | 30 |
| Weichmacher | phr | 20 | 20 | 20 | 20 |
| Magnesia | phr | 0,5 | 0,5 | 0,5 | 0,5 |
| Stearinsäure | phr | 2 | 2 | 2 | 2 |
| Zinkstearat | phr | 2,5 | 2,5 | 2,5 | 2,5 |
| Zinkoxid | phr | 3 | 3 | 3 | 3 |
| Beschleuniger | phr | 1 | 1 | 1 | 1 |
| Schwefel | phr | 0,4 | 0,4 | 0,4 | 0,4 |

[a]Ruß A: Typ N 660
[b]Ruß B: Ruß mit einer CTAB-Oberfläche von 19 $m^2/g$ und einer DBP-Zahl von 79 mL/100 g
[c]Talk mit einer BET-Oberfläche von 22,3 $m^2/g$, einer mittleren Partikelgröße ($D_{50}$) von 5,9 $\mu$m und einem Schichtindex von 4,4

Tabelle 2

| Eigenschaften | Einheit | 1(V) | 2(V) | 3(V) | 4(E) |
|---|---|---|---|---|---|
| $t_{10}$ | min | 1,66 | 1,78 | 1,20 | 1,64 |
| $t_{40}$ | min | 3,66 | 3,68 | 2,44 | 3,05 |
| $t_{90}$ | min | 9,28 | 11,95 | 9,02 | 12,03 |
| Mooney ML 1+4 | - | 51,9 | 41,4 | 54,5 | 47,8 |
| Zugfestigkeit | MPa | 7,0 | 6,3 | 5,2 | 5,5 |
| Reißdehnung | % | 850 | 917 | 807 | 848 |
| Spannungswert 100 % | MPa | 0,69 | 0387 | 0,71 | 0,93 |
| Spannungswert 200 % | MPa | 1,28 | 1,32 | 1,28 | 1,43 |
| Spannungswert 300 % | MPa | 2,2 | 1,82 | 2,09 | 2 |
| Bruchenergiedichte | - | 25,9 | 24,5 | 20,0 | 21,5 |
| Härte | ShoreA | 43,4 | 43,9 | 44,4 | 47,1 |
| Rückprallelastizität | % | 12,1 | 12,4 | 11,6 | 11,9 |
| Luftpermeabilität | $m^2/Pa*s$ | $7,6*10^{-17}$ | $4,7*10^{-17}$ | $6,3*10^{-17}$ | $44*10^{-17}$ |
| Monsanto Ermüdung | kZyklen | 455 | 499 | 838 | 1560 |
| De Mattia Rissbild 4000 Zyklen | Stufe | - | - | - | - |

(fortgesetzt)

| Eigenschaften | Einheit | 1(V) | 2(V) | 3(V) | 4(E) |
|---|---|---|---|---|---|
| 8000 Zyklen | Stufe | - | - | 0,5 | - |
| 16000 Zyklen | Stufe | - | - | 0,5 | 0,5 |
| 32000 Zyklen | Stufe | - | - | 0,5 | 0,5 |
| 64000 Zyklen | Stufe | - | - | 0,5 | 1 |
| 128000 Zyklen | Stufe | 0,5 | - | 0,5 | 1,5 |
| 256000 Zyklen | Stufe | 0,5 | - | 0,5 | 1,5 |
| 512000 Zyklen | Stufe | 0,5 | - | 0,5 | 1,5 |
| 1024000 Zyklen | Stufe | 2,5 | 1,5 | 1 | 1,5 |
| 2000000 Zyklen | Stufe | 6 | 6 | 2 | 2 |
| De Mattia Risswachstum | | | | | |
| 4000 Zyklen | cm | - | - | - | - |
| 8000 Zyklen | cm | - | - | - | - |
| 16000 Zyklen | cm | - | - | - | - |
| 32000 Zyklen | cm | - | - | - | - |
| 64000 Zyklen | cm | - | - | - | - |
| 128000 Zyklen | cm | - | 2,7 | - | - |
| 256000 Zyklen | cm | 3,3 | 4,3 | 2,4 | 3,1 |
| 512000 Zyklen | cm | 62 | 7,5 | 3,4 | 4,9 |
| 1024000 Zyklen | cm | 11,9 | 12,8 | 5,6 | 7,4 |
| 2000000 Zyklen | cm | 20,1 | 22,6 | 9,9 | 10,4 |

Aus den Tabellen wird ersichtlich, dass erst durch die Kombination von delaminierten Talk mit dem speziellen Ruß (Mischung 4(E)) eine Mischung erhalten werden kann, deren Vulkanisate eine hohe Luftdichtigkeit aufweisen (Luftpermeabilität < 4,5*10$^{-17}$ m$^2$/(Pa*s)) und gleichzeitig die Ermüdungsbeständigkeit in einem Maße erhöht wird, das weit über einen additiven Effekt hinaus geht und nicht zu erwarten war. Rissbildung und Risswachstum liegen ebenfalls auf sehr geringem Niveau. Insbesondere die Ermüdungsbeständigkeit bei zyklischer Dehnbeanspruchung ermittelt mit dem Monsanto Ermüdungstestgerät ist in hohem Maße verbessert worden. In den Mischungen 2 und 3, die nicht die erfindungsgemäße Kombination von Talk und Ruß enthalten, werden so hohe Ermüdungsbeständigkeiten nicht erreicht.

**Patentansprüche**

1. Kautschukmischung, insbesondere für den Innerliner von Fahrzeugluftreifen, enthaltend

- 40 - 100 phr (Gewichtsteile bezogen auf 100 Gewichtsteile der Gesamtkautschukmasse) zumindest eines Halobutylkautschukes,
- bis maximal 60 phr zumindest eines weiteren Kautschukes ausgewählt aus der Gruppe, bestehend aus Butylkautschuk, Polybutadien, Styrol-Butadien-Copolymer, 3,4-Polyisopren, cis-1,4-Polyisopren, Naturkautschuk, Styrol-Isopren-Copolymer und Styrol-Isopren-Butadien-Terpolymer,
- 5 - 70 phr zumindest eines delaminierten Talkes mit einer BET-Oberfläche gemäß DIN 66131 von 10 - 40 m$^2$/g, einer mittleren Partikelgröße (D$_{50}$) von 4 - 8 $\mu$m bestimmt mit Laserbeugungsmessung und einem Schichtindex (lamellarity index) von 3-15,
- 10 - 100 phr zumindest eines Rußes mit einer CTAB-Oberfläche gemäß ASTM-D 3765 von 10 - 25 m$^2$/g und einer DBP-Zahl gemäß ASTM-D 2414 von 50 bis 160 mL/100 g.

2. Kautschukmischung nach Anspruch 1, **dadurch gekennzeichnet, dass** sie 10 - 40 phr des delaminierten Talkes enthält.

3. Kautschukmischung nach Anspruch 1 oder 2, **dadurch gekennzeichnet, dass** sie 30 - 60 phr des Rußes enthält.

4. Kautschukmischung nach zumindest einem der Ansprüche 1 bis 3, **dadurch gekennzeichnet, dass** der Ruß eine CTAB-Oberfläche gemäß ASTM-D 3765 von 14 - 24 m$^2$/g und eine DBP-Zahl gemäß ASTM-D 2414 von 70 bis 90 mL/100 g aufweist.

**5.** Fahrzeugluftreifen mit einem Innerliner, der auf einer Kautschukmischung nach einem der Ansprüche 1 bis 4 basiert.

**Claims**

**1.** Rubber blend, in particular for the inner liner of pneumatic vehicle tires, containing

- 40 - 100 phr (parts by weight based on 100 parts by weight of the total rubber mass) of at least one halobutyl rubber,
- up to not more than 60 phr of at least one further rubber selected from the group consisting of butyl rubber, polybutadiene, styrene-butadiene copolymer, 3,4-polyisoprene, cis-1,4-polyisoprene, natural rubber, styreneisoprene copolymer and styrene-isoprene-butadiene terpolymer,
- 5-70 phr of at least one delaminated talc having a BET surface area according to DIN 66131 of 10-40 $m^2/g$, an average particle size ($D_{50}$) of 4-8 $\mu$m, determined by laser diffraction measurement, and a lamellarity index of 3-15,
- 10-100 phr of at least one carbon black having a CTAB surface area according to ASTM-D 3765 of 10-25 $m^2/g$ and a DBP number according to ASTM-D 2414 of 50 to 160 mL/100 g.

**2.** Rubber blend according to Claim 1, **characterized in that** it contains 10-40 phr of the delaminated talc.

**3.** Rubber blend according to Claim 1 or 2, **characterized in that** it contains 30-60 phr of the carbon black.

**4.** Rubber blend according to at least one of Claims 1 to 3, **characterized in that** the carbon black has a CTAB surface area according to ASTM-D 3765 of 14-24 $m^2/g$ and a DBP number according to ASTM-D 2414 of 70 to 90 mL/100 g.

**5.** Pneumatic vehicle tire having an inner liner which is based on a rubber blend according to any of Claims 1 to 4.

**Revendications**

**1.** Mélange de caoutchoucs, destiné notamment à la gomme intérieure de pneumatiques pour véhicules, contenant

- 40 à 100 pce (parts en poids par rapport à 100 parts en poids de l'intégralité de la masse caoutchouteuse) d'au moins un caoutchouc halobutyle,
- jusqu'à 60 pce au moins d'un autre caoutchouc choisi dans le groupe constitué par le caoutchouc butyle, le polybutadiène, le copolymère styrène/butadiène, le 3,4-polyisoprène, le cis-1,4-polyisoprène, le caoutchouc naturel, le copolymère styrène/isoprène et le terpolymère styrène/isoprène/butadiène,
- 5 à 70 pce d'au moins un talc délaminé présentant une surface BET selon DIN 66131 comprise entre 10 et 40 $m^2/g$, une taille des particules moyenne ($D_{50}$) comprise entre 4 et 8 $\mu$m, déterminée au moyen d'une mesure par diffraction laser, et un indice de lamellarité compris entre 3 et 15,
- 10 à 100 pce d'au moins un noir de carbone présentant une surface CTAB selon ASTM-D 3765 comprise entre 10 et 25 $m^2/g$ et un nombre DBP selon ASTM-D 2414 compris entre 50 et 160 ml/100 g.

**2.** Mélange de caoutchoucs selon la revendication 1, **caractérisé en ce qu'**il contient 10 à 40 pce dudit talc délaminé.

**3.** Mélange de caoutchoucs selon les revendications 1 ou 2, **caractérisé en ce qu'**il contient 30 à 60 pce dudit noir de carbone.

**4.** Mélange de caoutchoucs selon au moins une des revendications 1 à 3, **caractérisé en ce que** ledit noir de carbone présente une surface CTAB selon ASTM-D 3765 comprise entre 14 et 24 $m^2/g$ et un nombre DBP selon ASTM-D 2414 compris entre 70 et 90 ml/100 g.

**5.** Pneumatique pour véhicules pourvu d'une gomme intérieure basée sur un mélange de caoutchoucs selon l'une des revendications 1 à 4.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0832927 B1
- US 5576372 A

- US 6348536 B1